# Europäisches Patentamt

# European Patent Office

## Office européen des brevets

(19)

(11) Veröffentlichungsnummer **0 031 317 B1**

(12) **EUROPÄISCHE PATENTSCHRIFT**

(45) Veröffentlichungstag der Patentschrift:
**19.09.84**

(51) Int. Cl.³: **G 01 F 15/06,** G 01 F 1/115,
G 01 K 17/16, G 12 B 17/06

(21) Anmeldenummer: **80890154.0**

(22) Anmeldetag: **22.12.80**

(54) Einrichtung zur Messung der Menge eines in einer Leitung strömenden Wärmeträgermediums.

(30) Priorität: **21.12.79 AT 8076/79**

(43) Veröffentlichungstag der Anmeldung:
**01.07.81 Patentblatt 81/26**

(45) Bekanntmachung des Hinweises auf die Patenterteilung:
**19.09.84 Patentblatt 84/38**

(84) Benannte Vertragsstaaten:
**BE CH DE FR IT LI NL**

(56) Entgegenhaltungen:
**DE - A - 2 602 045
DE - A - 2 615 858
GB - A - 1 051 209
US - A - 2 962 895
US - A - 3 858 448**

(73) Patentinhaber: **ELIN-UNION Aktiengesellschaft für elektrische Industrie, Penzinger Strasse 76, A-1141 Wien (AT)**

(72) Erfinder: **Ritter, Hermann, Griegstrasse 1-5/4/5, A-1200 Wien (AT)**
Erfinder: **Mehl, Wilhelm, Säulengasse 21/20, A-1090 Wien (AT)**
Erfinder: **Reisinger, Walter, Ungargasse 28/II/16, A-1030 Wien (AT)**
Erfinder: **Schumeritsch, Josef, Göllnerg. 27/21, A-1030 Wien (AT)**

(74) Vertreter: **Krause, Peter, Penzinger Strasse 76, A-1141 Wien (AT)**

BUNDESDRUCKEREI BERLIN

## Beschreibung

Die Erfindung bezieht sich auf eine Einrichtung zur Messung der Menge eines in einer Leitung strömenden Wärmeträgermediums, insbesondere zur Verwendung in Wärmeträgermengenmessern, mit einem außerhalb der Leitung angeordneten mechanischen Zählwerk, welches eine Antriebswelle aufweist, einem in der Leitung angeordneten, von dem strömenden Wärmeträgermedium in Drehung versetzten Rad, und einer Magnetkupplung zur Kopplung des Rads mit der Antriebswelle des Zählwerks.

Der Anwendungsbereich ist hauptsächlich bei Klein-, Haushalts- und Industriewärmemengenmessungen vornehmlich von strömenden Flüssigkeiten in Leitungsrohren zu suchen. Bei einer Vielzahl von bestehenden Wärmemengenzählern sind die Probleme der Meßgenauigkeit im Antriebsteil durch ein Flügelrad oder eine andere besondere Bauform mit einem Leitapparat ausreichend gelöst.

Die Temperaturvergleichsmessung erfolgt mittels Thermoelementen oder anderen elektrischen Elementen im Vorlauf und Rücklauf des wärmeverbrauchenden Gerätes in welchem das zu messende Medium strömt. Die Umdrehungsgeschwindigkeit des Antriebsrades und somit die Strömungsmenge des Mediums wird mittels mechanischem Zählwerk ermittelt, dort im Anzeigenteil festgehalten sowie in elektrische Impulse umgewandelt.

Die so ermittelte elektrisch definierte Strömungsmenge und die elektrischen Vergleichswerte der Thermoelemente werden in einen Prozessor eingespeist, der diese Werte verknüpft und daraus den Wärmemengenverbrauch in kWh ermittelt.

Die größte Schwierigkeit ergibt sich nun bei dem Zusammenbau des Zählwerkes mit dem Antriebsteil, da folgende Hauptforderungen gestellt werden:

Erstens soll die Bauform der mechanischen Zähleinrichtung möglichst klein gehalten werden;

zweitens soll die Produktion des Zählwerks mit seinen Übersetzungen und Anzeigeteilen möglichst billig, leicht und korrosionssicher sein, wodurch die Ausführung dieser Teile mit Kunststoffen zu realisieren ist; und

drittens soll der Zähler möglichst universell einsetzbar sein; womit die Mengenzähleinrichtung möglichst temperaturunabhängig sein muß.

Alle diese Forderungen zu erfüllen war bei den bekannten Wärmezähleinrichtungen nicht optimal möglich, obwohl man schon einen Luftspalt zwischen Zählerteil und Antriebsteil schuf.

Die Erfindung setzt sich nun zum Ziel, diesen Umstand zu beseitigen und eine Wärmemengenzähleinrichtung zu schaffen, die möglichst unempfindlich gegen Temperatureinwirkungen ist und es daher ermöglicht, den mechanischen Zählerteil möglichst nahe an das heiße Medium heranzubringen um die Bauform dadurch klein zu gestalten.

Die Erfindung ist gekennzeichnet durch eine zwischen der Leitung und dem Zählwerk angeordnete Abschirmblende, welche eine koaxial zum Rad angeordnete kreisförmige Ausnehmung aufweist, durch die sich die Antriebswelle koaxial erstreckt, sowie eine Luftschraube, welche in der Ausnehmung auf der Antriebswelle befestigt ist.

Die Luftschraube ermöglicht gewissermaßen erstmals eine Kühlung des Oberteils, der die Zähleinrichtung beinhaltet. Die Aufgabe der Kühlung bzw. der Verhinderung des Aufsteigens der Wärme vom Unterteil, dem Antriebsteil, wird dadurch gelöst, daß von oben Luft angesaugt wird und nach unten geblasen wird. Die Verblendung dient der Luftströmung als Leitapparat und verhindert außerdem das Aufsteigen von warmer Luft zum Zähler bei Stillstand oder langsamer Drehzahl des Antriebsrades.

Gemäß einer weiteren Ausgestaltung der Erfindung ist an der Pheripherie eines Flügels der Luftschraube ein Reflektor angeordnet, der zur Erzeugung von der Durchflußmenge des Wärmeträgermediums proportional Impulsen mit einer Lichtschranke, die am Rande der Ausnehmung in der Abschirmblende befestigt ist, zusammenarbeitet. Diese vorteilhafte Ausgestaltung der Erfindung ermöglicht es nun, die Umdrehungszahl der Luftschraube und somit die Umdrehungszahl des Antriebsrades über Lichtimpulse, die vom Reflektor an der Lichtschranke reflektiert werden und dort zu elektrischen Impulsen umgewandelt werden, als digitalen Wert in den Prozessor einzuspeichern, ohne das mechanische Zählwerk zu verkomplizieren.

Gemäß einer weiteren Ausgestaltung der Erfindung ist an einem Flügel der Luftschraube ein Näherungsindikator angebracht, der elektrische digitale Impulse entsprechend der Durchflußmenge initiiert.

Anhand der Zeichnung wird die Erfindung näher erläutert.

Fig. 1 zeigt im Schnitt einen Heißwasserzähler und

Fig. 2 eine schematische Zusammenstellungszeichnung.

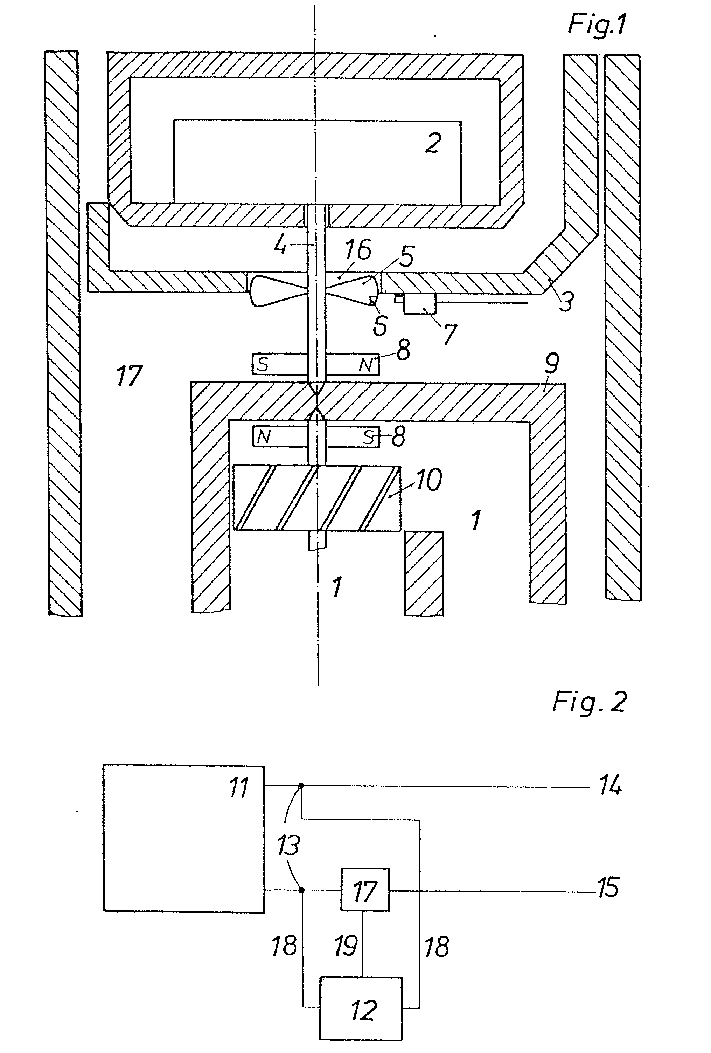

Nach der Ausführungsform in Fig. 1 besteht der Heißwasserzähler des Wärmemengenzählers im wesentlichen aus dem mechanischen Zählwerk 2, dem Rad 10, der Magnetkupplung 8 und der Luftschraube 5. Der gesamte Antriebsteil mit der Leitung 9, Antriebsrad 10 und strömenden Medium 1 sowie die Magnetkupplung 8 und das Zählwerk 2 sind an sich bekannte Bauteile eines Durchflußmengenmeßgerätes. Die Idee der Erfindung steckt vor allem in der vorteilhaften zusätzlichen Abschirmblende 3, welche die von der Leitung 9 aufsteigende Wärme hindert, direkt an das Zählwerk 2 heranzuströmen. Die Abschirmblende 3 hat axial genau über dem Rad 10 eine kreisförmige Ausnehmung 16, in der sich eine Luftschraube 5 befindet, die auf der Antriebswelle befestigt ist. Dreht sich nun das Rad 10, infolge Strömung des Mediums 1 in Drehrichtung, so überträgt die Magnetkupplung 8 und die Antriebswelle 4 dieses auf die Luftschraube 5, die sich ihre Rotation Luft von oben, das heißt zwischen Zählwerk 2 und Abschirmblende 3 ansaugt und nach unten, daß heißt in Richtung Magnetkupplung 8, bläst. Dadurch können alle Bauteile im Zählwerk 2 aus den herkömmlichen Kunststoffen gefertigt werden, ohne daß durch Überhitzung dieser Teile ein Schaden entstehen kann.

Ebenso begünstigt die Luftschraube 5 durch ihren Dämpfungseffekt die Meßgenauigkeitskennlinie des Heißwasserzählers, wenn das Rad 10 als Flügelrad ausgeführt ist.

Gemäß einer weiteren besonderen Ausgestaltung der Erfindung ist an einem Flügel der Luftschraube 5 ein Reflektor 6 angebracht. Der Reflektor 6 reflektiert Lichtstrahlen in die Lichtschranke 7, sobald er sich an dieser vorbeibewegt. Dadurch entstehen Lichtimpulse, die durch die Lichtschranke in elektrische Impulse umgewandelt werden und an den Prozessor weitergeleitet werden.

Fig. 2 zeigt eine mögliche schematische Zusammenstellung der einzelnen Teile der Wärmemengenzählungseinrichtung, wobei 11 den Wärmeverbraucher darstellt.

Der Vorlauf 15 bringt den Wärmeträger vorerst zum Heißwasserzähler 17 der auch im Rücklauf 14 eingebaut werden könnte, hernach zum Thermoelementmeßpunkt 13 und von dort in den Wärmeverbraucher 11. Der Rücklauf 14 führt den Wärmeträger über den zweiten Meßpunkt 13 wieder vom Wärmeverbraucher 11 weg.

Die Meßleitung 18 bringen die Wärmemeßwerte zum Prozessor 12. Die Meßleitung 19 bringt die Durchströmwerte zum Prozessor 12. Darin wird sodann aus den drei Werten (Vorlaufund Rücklauftemperatur und Umdrehungszahl) der Wärmeverbrauch in kWh ausgegeben.

Vom Prozessor 12 kann ebenso direkt abgelesen werden oder die Information an einen anderen Datenträger weitergegeben werden.

### Patentansprüche

1. Einrichtung zur Messung der Menge eines in einer Leitung strömenden Wärmeträgermediums, insbesondere zur Verwendung in Wärmemengenmessern, mit einem außerhalb der Leistung (9) angeordneten mechanischen Zählwerk (2), welches eine Antriebswelle (4) aufweist, einem in der Leitung angeordneten, von dem strömenden Wärmeträgermedium in Drehung versetzten Rad (10), einer Magnetkupplung (8) zur Kupplung des Rades mit der Antriebswelle des Zählwerks, gekennzeichnet durch eine zwischen der Leitung (9) und dem Zählwerk (2) angeordnete Abschirmblende (3), welche eine koaxial zum Rad (10) angeordnete kreisförmige Ausnehmung (16) aufweist, durch die sich die Antriebswelle (4) koaxial erstreckt, sowie eine Luftschraube (5), welche in der Ausnehmung (16) auf der Antriebswelle (4) befestigt ist.

2. Einrichtung nach Anspruch 1, dadurch gekennzeichet, daß an der Peripherie eines Flügels der Luftschraube (5) ein Reflektor (6) angeordnet ist, der zur Erzeugung von der Durchflußmenge des Wärmeträgermediums proportionalen Impulsen mit einer Lichtschranke (7), die am Rande der Ausnehmung (16) in der Abschirmblende (3) befestigt ist, zusammenarbeit.

3. Einrichtung nach Anspruch 1, dadurch gekennzeichnet, daß an einem Flügel der Luftschraube (5) ein Nährungsindikator (6) angebracht ist, der elektrische digitale Impulse entsprechend der Durchflußmenge initiiert.

### Claims

1. Apparatus for the measurement of the amount of a heat carrier medium flowing in a pipe, especially for use in heat quantity measurers, with a mechanical counter (2), arranged outside of the pipe (9), which has a driving shaft (4), a wheel (10) arranged in the pipe and rotated by the flowing heat carrier medium, a magneto coupling (8) for coupling the wheel with the driving shaft of the counter, characterized by a screening shutter (3), arranged between the pipe (9) and the counter (2), which has a circular opening (16), arranged co-axially to the wheel (10), through which the driving shaft (4) extends co-axially, as well as propeller (5) which is fixed in the opening (16) on the driving shaft (4).

2. Apparatus according to claim 1, characterized in that, on the periphery of a wing of the propeller (5), there is provided a reflector (6) which, for the production of impulses proportional to the flow-through amount of the heat carrier medium, co-operates with a light barrier (7) which is fixed on the edge of the opening (16) in the screening shutter (3).

3. Apparatus according to claim 1, characterized in that, on a wing of the propeller (5), there is applied a proximity indicator (6) which initiates electric digital impulses corresponding to the flow-through amount.

### Revendications

1. Dispositif pour la mesure du débit d'un fluide caloporteur circulant dans une conduite, destiné en particulier à être utilisé dans des appareils de mesure des quantités de chaleur, qui comprend un compteur mécanique (2) agencé à l'extérieur de la conduite (9) et qui comprend un arbre d'entraînement (4), une roue (10) agencée dans la conduite et mise en rotation par le fluide caloporteur en circulation, un accouplement magnétique (8) servant à accoupler la roue à l'arbre d'entraînement du compteur, ce dispositif étant caractérisé par un diaphragme-écran (3) interposé entre la conduite (9) et le compteur (2) et qui présente un évidement circulaire (16) disposé coaxialement à la roue (10), à travers lequel l'arbre d'entraînement (4) s'étend coaxialement, ainsi que par une hélice aérienne (5) qui est fixée sur l'arbre d'entraînement (4) dans l'évidement (16).

2. Dispositif selon la revendication 1, caractérisé en ce que, sur la périphérie d'une pale de l'hélice aérienne (5) est agencé un réflecteur (6) qui coopère, pour la production d'impulsions proportionelles au débit du fluide caloporteur, avec une cellule photo-électrique (7) qui est fixée au bord de l'évidement (16) du diaphragme-écran (3).

3. Dispositif selon la revendication 1, caractérisé en ce que, sur une pale de l'hélice aérienne (5) est monté un indicateur de proximité (6) qui déclenche des impulsions électriques numériques en fonction du débit.

0 031 317

Fig. 1

Fig. 2